# EUROPEAN PATENT APPLICATION

(11) **EP 4 471 539 A1**
(43) Date of publication of application: **04.12.2024**
(21) Application number: 23759311.6
(22) Date of filing: 27.02.2023
(51) Int. Cl.: G06F 1/18, G06F 1/20

(54) **BASE BOARD, MAINBOARD, AND COMPUTING DEVICE**

(30) Priority: 28.02.2022 CN 202210188349
(71) Applicant: Huawei Technologies Co., Ltd., Shenzhen, Guangdong 518129 (CN)
(72) Inventor: JU, Haiqiang, Shenzhen, Guangdong 518129 (CN); NIU, Yuanjun, Shenzhen, Guangdong 518129 (CN); HU, Renjie, Shenzhen, Guangdong 518129 (CN); LIU, Hancheng, Shenzhen, Guangdong 518129 (CN)
(74) Representative: Körber, Martin Hans
(86) International application number: PCT/CN2023/078358
(87) International publication number: WO 2023/160690

(57) **Abstract**

A basic computing unit is provided. The basic computing unit includes a processor and a memory, and the basic computing unit communicates with an extension unit through an external interface. The extension unit is configured to extend a function of the basic computing unit. The basic computing unit is further provided with a mounting structure, and the basic computing unit is fastened, via the mounting structure, to a chassis on which the basic computing unit is located. A position of the mounting structure on the basic computing unit is determined based on the processor, the memory, and a stress factor, and positions of mounting structures on basic computing units of different sizes overlap. The positions of the mounting structures on the basic computing units of the different sizes may be disposed in an overlapping manner. Therefore, when a basic computing unit on the chassis needs to be replaced, a basic computing unit of another size may be mounted on the chassis by using the mounting structure with an overlapping position, so that compatibility of the chassis with the basic computing units of the different sizes can be improved. In this way, when the basic computing unit on the chassis is replaced, the chassis does not need to be re-developed to adapt to a new basic computing unit, so that development costs and a development periodicity of an entire server vendor can be reduced.

## Description

This application claims priority to Chinese Patent Application No. 202210188349.7, filed with the China National Intellectual Property Administration on February 28, 2022 and entitled "BASIC COMPUTING UNIT, MAINBOARD, AND COMPUTING DEVICE", which is incorporated herein by reference in its entirety.

### TECHNICAL FIELD

This application relates to the field of computer technologies, and in particular, to a basic computing unit, a mainboard, and a computing device.

### BACKGROUND

Since the 1980s, Microsoft and Intel have formed the Wintel alliance to promote the development of a personal computer (personal computer, PC) industry. The two companies work closely in the PC industry to drive a computing industry to grow faster and gradually influence another computing device such as a server. The computing device such as the server has various application scenarios and configuration types, and has a high reliability requirement. In addition, the server has a huge commercial volume and is a focus of open industry ecosystem construction.

A conventional server is used as an example. Currently, an industry ecosystem of the conventional server has the following characteristic.

Low standardization: The conventional server has specific component standardization foundations. For example, components such as a memory module, a solid state drive (Solid State Drive, SSD), and a peripheral component interconnect express (Peripheral Component Interconnect Express, PCIe) card have respective standards. Component standardization greatly contributes to the industry ecosystem and resource sharing, and reduces a development workload of some entire server vendors. However, standardized components account for a small proportion in an entire server. Consequently, development of a server mainboard further requires a large amount of manpower to complete adaptation between the standardized components and non-standardized components.

Currently, for a basic computing unit in a computing device, for example, a server or a terminal, different entire server vendors usually produce various basic computing units based on different application scenarios or different types of configuration requirements. In this way, when an application scenario or a configuration requirement changes, an entire server vendor not only needs to re-develop a basic computing unit, but also needs to develop a new chassis to adapt to a newly developed basic computing unit. This causes high development costs.

Therefore, how to reduce the development costs of the entire server vendor becomes an important problem that urgently needs to be resolved.

### SUMMARY

This application provides a basic computing unit, a mainboard, and a computing device, to reduce development costs of an entire server vendor.

According to a first aspect, this application provides a basic computing unit. The basic computing unit includes a processor and a memory, the basic computing unit communicates with an extension unit through an external interface, and the extension unit is configured to extend a function of the basic computing unit. The basic computing unit is further provided with a mounting structure, the basic computing unit is fastened, via the mounting structure, to a chassis on which the basic computing unit is located, a position of the mounting structure on the basic computing unit is determined based on the processor, the memory, and a stress factor, and positions of mounting structures on basic computing units of different sizes overlap.

The positions of the mounting structures on the basic computing units of the different sizes may be disposed in an overlapping manner. Therefore, when a basic computing unit on the chassis needs to be replaced, a basic computing unit of another size may be mounted on the chassis by using the mounting structure with an overlapping position, so that compatibility of the chassis with the basic computing units of the different sizes can be improved. In this way, when the basic computing unit on the chassis is replaced, the chassis does not need to be re-developed to adapt to a new basic computing unit, so that development costs and a development periodicity of an entire server vendor can be reduced.

In addition, because a component is deployed outside the basic computing unit, decoupling between the component and the basic computing unit may be implemented. Therefore, when the component is updated due to a differentiated requirement, the basic computing unit does not need to be re-developed, thereby reducing development costs; or when the basic computing unit on the chassis is replaced, a new basic computing unit may reuse the component, thereby improving a reuse rate of the component.

In a possible implementation, the mounting structure includes a mounting hole, and the mounting structure on the basic computing unit meets one or both of the following conditions: A distance between different mounting holes on the basic computing unit is an integer multiple of 10 millimeters (or another value), or a distance between adjacent mounting holes on the basic computing unit does not exceed a preset range (for example, 100 mm to 150 mm). In this way, when the basic computing unit is mounted, it is convenient to determine a corresponding fastening position on the chassis, so that different fastening positions may be set for basic computing units in different forms, thereby improving a reuse rate of the chassis (and a lining board). Alternatively, after the basic computing unit is mounted on the chassis via these mounting holes, the distance between the mounting holes can reduce impact of stress (for example, stress generated when an external component is plugged into or pulled out from the basic computing unit) on deformation of the basic computing unit, and the like.

In a possible implementation, when the chassis includes a plurality of basic computing units, the plurality of basic computing units are coupled through a high-speed interface in the external interface. In this way, performance such as computing and storage of the computing device may be improved by interconnecting the plurality of basic computing units, to meet a performance requirement of the computing device in an application scenario.

In a possible implementation, a connection between the plurality of basic computing units and the extension unit is established in a parallel-connected manner, or a connection between the plurality of basic computing units and the extension unit is established in a parallel-connected manner. In this way, interconnection of the plurality of basic computing units can be implemented, to improve the performance of the computing device.

In a possible implementation, when the plurality of basic computing units are connected in parallel to the extension unit, the plurality of basic computing units are coupled to the extension unit through a plurality of management interfaces that are on the extension unit. In this way, the extension unit may manage the plurality of basic computing units via the plurality of management interfaces.

In a possible implementation, the plurality of basic computing units include a first basic computing unit and a second basic computing unit, where an identity of the first basic computing unit is primary, and the primary identity of the first basic computing unit is determined via a first management interface that connects the first basic computing unit to the extension unit; and an identity of the second basic computing unit is secondary, and the secondary identity of the second basic computing unit is determined via a second management interface that connects the second basic computing unit to the extension unit. In this way, the extension unit determines a primary or secondary identity of each basic computing unit via a management interface used to connect to the basic computing unit, to implement primary-secondary identity identification of the plurality of basic computing units, to manage each basic computing unit, for example, perform clock synchronization.

In a possible implementation, when the plurality of basic computing units are connected in series to the extension unit, the plurality of basic computing units are coupled to the extension unit through one management interface that is on the extension unit. In this way, the extension unit may be coupled to the plurality of basic computing units through one management interface, to manage the plurality of basic computing units.

In a possible implementation, the plurality of basic computing units include a first basic computing unit and a second basic computing unit, an identity of the first basic computing unit is primary, and the primary identity of the first basic computing unit is determined by connecting the basic computing unit to the extension unit; and an identity of the second basic computing unit is secondary, and the secondary identity of the second basic computing unit is determined based on the primary identity of the first basic computing unit. In this way, the extension unit may determine a basic computing unit connected through the management interface as primary basic computing unit, and determine other basic computing units coupled to the primary basic computing unit as secondary basic computing units, so that primary-secondary identity identification of the plurality of basic computing units is implemented, thereby facilitating management by the extension unit on the plurality of basic computing units.

In a possible implementation, the basic computing unit includes a plurality of areas, and the plurality of areas on the basic computing unit are determined based on a hardware configuration or a cabling layout on the basic computing unit. For example, a separate area may be set for each element on the basic computing unit, so that the element is deployed in the set area, or a part of elements may be integrated and deployed in one area, and other elements are deployed in another area. For another example, a deployment area of each element may be determined based on a cabling layout of each element on the basic computing unit, so that a cabling length between elements on the basic computing unit is the shortest, or cabling does not cross.

In a possible implementation, the plurality of areas on the basic computing unit include a first area, a second area, and a third area, the third area is located between the first area and the second area, external interfaces are located in the first area and the second area, and the processor and the memory are located in the third area. In this way, the processor and the memory may be deployed in the middle of the basic computing unit, and external interfaces may be deployed on two sides of the basic computing unit, so that cabling on the basic computing unit may be short, and crossing of the cabling on the basic computing unit may further be avoided as much as possible.

In a possible implementation, the external interface includes a management interface, a power interface, and a high-speed interface, and the basic computing unit is connected to the extension unit through the management interface, connected to an ingress power supply through the power interface, and connected to a component or another basic computing unit through the high-speed interface.

In a possible implementation, basic computing units of different sizes include different quantities of processors or different sizes of memories. For example, in this embodiment, basic computing units in six forms may be provided based on a quantity of processors and a memory size, and are basic computing units in an A1 form, an A2 form, a B1 form, a B2 form, a C1 form, and a C2 form. Specifically, the basic computing unit in the A1 form supports one processor, and each channel is inserted with one DIMM. The basic computing unit in the A2 form supports one processor, and each channel is inserted with one or two DIMMs. The basic computing unit in the B1 form supports two processors, and each channel is inserted with one DIMM; or supports one processor, and each channel is inserted with one or two DIMMs. The basic computing unit in the B2 form supports two processors, and each channel is inserted with one or two DIMMs; or supports one processor, and each channel is inserted with one or two DIMMs. The basic computing unit in the C1 form supports four processors, and each channel is inserted with one DIMM. The basic computing unit in the C2 form supports four processors, and each channel is inserted with one or two DIMMs, or supports two processors, and each channel is inserted with one or two DIMMs. In actual applications, basic computing units in more forms can be implemented.

In a possible implementation, the basic computing unit is mounted on a lining board via the mounting structure, and the lining board is mounted on the chassis; or the basic computing unit is directly mounted on the chassis via the mounting structure.

In a possible implementation, when the basic computing unit is mounted on the lining board via the mounting structure, the basic computing unit adjusts a mounting height based on a convex hull height of a self-clinching nut part that is on the lining board. In this way, an effective spacing can be maintained between surfaces of basic computing units with different thicknesses and the chassis, so that components on the basic computing unit can be compatible in a spatial structure.

According to a second aspect, an embodiment of this application provides a mainboard. The mainboard includes an extension unit and a plurality of basic computing units. The extension unit includes a baseboard management controller BMC. Each basic computing unit includes a processor and a memory. At least one of the plurality of basic computing units communicates with the extension unit through an external interface. The extension unit is configured to extend a function of the plurality of basic computing units, and the plurality of basic computing units are interconnected.

In a possible implementation, the plurality of basic computing units are coupled through a high-speed interface in the external interface.

In a possible implementation, a connection between the plurality of basic computing units and the extension unit is established in a parallel-connected manner, or a connection between the plurality of basic computing units and the extension unit is established in a serial-connected manner.

In a possible implementation, when the plurality of basic computing units are connected in parallel to the extension unit, the plurality of basic computing units are coupled to the extension unit through a plurality of management interfaces that are on the extension unit.

In a possible implementation, the plurality of basic computing units include a first basic computing unit and a second basic computing unit, where an identity of the first basic computing unit is primary, and the primary identity of the first basic computing unit is determined via a first management interface that connects the first basic computing unit to the extension unit; and an identity of the second basic computing unit is secondary, and the secondary identity of the second basic computing unit is determined via a second management interface that connects the second basic computing unit to the extension unit.

In a possible implementation, when the plurality of basic computing units are connected in series to the extension unit, the plurality of basic computing units are coupled to the extension unit through one management interface that is on the extension unit.

In a possible implementation, the plurality of basic computing units include a first basic computing unit and a second basic computing unit, an identity of the first basic computing unit is primary, and the primary identity of the first basic computing unit is determined by connecting the first basic computing unit to the extension unit; and an identity of the second basic computing unit is secondary, and the secondary identity of the second basic computing unit is determined based on the primary identity of the first basic computing unit.

In a possible implementation, each basic computing unit is further provided with a mounting structure, each basic computing unit is fastened, via a respective mounting structure, to a chassis on which the basic computing unit is located. In addition, a position of the mounting structure on the basic computing unit is determined based on the processor, the memory, and a stress factor, and positions of mounting structures on basic computing units of different sizes overlap.

In a possible implementation, the mounting structure includes a mounting hole, and the mounting structure on the basic computing unit meets one or both of the following conditions: A distance between different mounting holes on the basic computing unit is an integer multiple of 10 millimeters, or a distance between adjacent mounting holes on the basic computing unit does not exceed a preset range.

In a possible implementation, each of the plurality of basic computing units includes a plurality of areas, and the plurality of areas are determined based on a hardware configuration or a cabling layout on the basic computing unit.

In a possible implementation, the plurality of areas on the basic computing unit include a first area, a second area, and a third area, the third area is located between the first area and the second area, external interfaces are located in the first area and the second area, and the processor and the memory are located in the third area.

In a possible implementation, the external interface includes a management interface, a power interface, and a high-speed interface, and the basic computing unit is connected to the extension unit through the management interface, connected to an ingress power supply through the power interface, and connected to a component or another basic computing unit through the high-speed interface.

In a possible implementation, basic computing units of different sizes include different quantities of processors or different sizes of memories.

In a possible implementation, the plurality of basic computing units are mounted on lining boards via mounting structures, and the lining boards are mounted on the chassis; or the plurality of basic computing units are directly mounted on the chassis via mounting structures.

In a possible implementation, when the plurality of basic computing units are mounted on the lining boards via the mounting structures, each basic computing unit adjusts a mounting height based on a convex hull height of a self-clinching nut part that is on the lining board.

According to a third aspect, this application further provides a mainboard. The mainboard includes the basic computing unit according to any one of the first aspect or the possible implementations of the first aspect.

According to a fourth aspect, this application further provides a computing device, including a mainboard. The mainboard includes the basic computing unit according to any one of the first aspect or the possible implementations of the first aspect.

In this application, based on the implementations according to the foregoing aspects, the implementations may be further combined to provide more implementations.

### BRIEF DESCRIPTION OF DRAWINGS

FIG. 1 is a schematic diagram of a structure of hardware of an example computing device according to this application;
FIG. 2 is a schematic diagram of structure of a basic computing unit according to this application;
FIG. 3 is a schematic diagram of basic computing units in A1 to C2 forms according to an embodiment of this application;
FIG. 4 is a schematic diagram of a structure of an example of a basic computing unit 101 in a B2 form according to an embodiment of this application;
FIG. 5 is a schematic diagram of a structure of another example of a basic computing unit 101 in a B2 form according to an embodiment of this application;
FIG. 6 is a schematic diagram of mounting a basic computing unit with a lining board on a chassis according to an embodiment of this application;
FIG. 7 is a schematic diagram of mounting basic computing units of different thicknesses according to an embodiment of this application;
FIG. 8 is a schematic diagram of mounting a basic computing unit without a lining board on a chassis according to an embodiment of this application;
FIG. 9 is a schematic diagram of a structure of an example of a basic computing unit 101 in a A2 form according to an embodiment of this application;
FIG. 10 is a schematic diagram of a structure of an example of a basic computing unit 101 in a B1 form according to an embodiment of this application;
FIG. 11 is a schematic diagram of a plurality of mounting holes on a basic computing unit 101 in A1 to C2 forms according to an embodiment of this application;
FIG. 12 is a schematic diagram of interconnecting two basic computing units each in a B2 form in parallel according to an embodiment of this application;
FIG. 13 is a schematic diagram in which an extension unit 1200 synchronizes clocks of a basic computing unit 1 and a basic computing unit 2;
FIG. 14 is a schematic diagram of interconnecting two basic computing units each in a B2 form in series according to an embodiment of this application;
FIG. 15 is a schematic diagram of mounting holes of three types of basic computing units A2, B 1, and B2 according to an embodiment of this application; and
FIG. 16 is a schematic diagram of a structure of hardware of a computing device according to this application.

### DESCRIPTION OF EMBODIMENTS

The following describes the technical solutions in this application with reference to accompanying drawings in embodiments of this application.

Development of a conventional server mainboard has a high technical requirement. In addition to a central processing unit (central processing unit, CPU), the mainboard also includes functions such as bus fan-out, power fan-out, and maintenance management. CPU-related circuits on the mainboard are all from a reference design provided by a CPU vendor. Different CPU vendors provide completely different reference designs, which causes a large quantity of resources and time for mainboard development and design. To meet a requirement on rapid update of a computing product such as a server, an entire server vendor needs to invest a lot of energy in differentiated innovation, while the vendor usually focuses on only low-level hardware specification comparison. This cannot meet customers' requirements for diversified scenarios and computing power, and also causes a case in which the entire server vendor is in low-efficiency homogenized competition. With a trend of computing power diversity, more processor vendors emerge and launch more processor products with different architectures. As a result, an iteration speed of various processors increases rapidly. In this case, power consumption of the processor keeps increasing, and a heat dissipation technology of a conventional server cannot meet a requirement. In addition, to improve system performance, the industry further launches a new media type (where for example, Intel launches a 3D Xpoint new non-volatile media) and form. The new media type and form also need to be supported and adapted by a new architecture. To develop a server that adapts to the foregoing technology trend, the entire server vendor needs to invest a huge development workload. However, due to differences between different products, a design solution of a same mainboard or an entire server cannot be reused. Therefore, the entire industry has a higher requirement on aspects such as a cross-architecture shared component, cross-generation evolution, shortening time to market (time to market, TTM), and reducing a total cost of operation (total cost of operation, TCO) of a server. Further development of the industry requires a more open and standardized server architecture to improve development efficiency, improve component reuse, and provide more flexibility and differentiation.

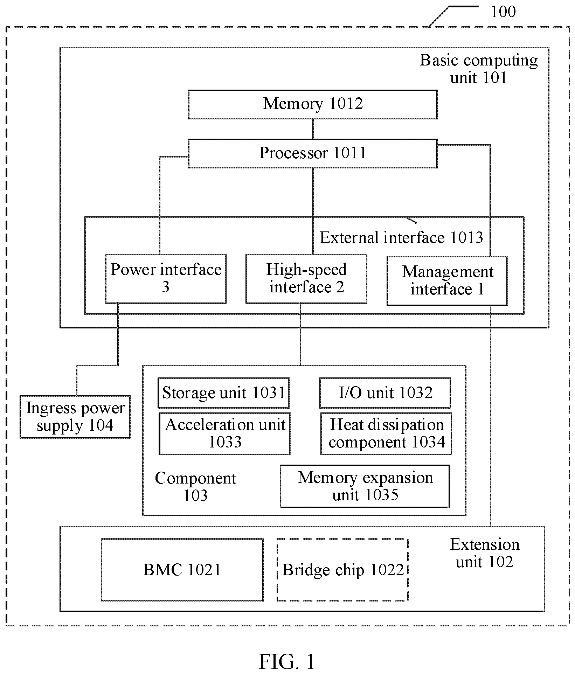

This application proposes an innovative peering architecture (which may also be referred to as a new server architecture or a new architecture). FIG. 1 is a schematic diagram of a structure of hardware of an example computing device according to this application. As shown in FIG. 1, in the architecture, a conventional mainboard is split into a basic computing unit (Basic Computing Unit, BCU) 101 and an extension unit (Extension Unit, EXU) 102, and the basic computing unit 101 and the extension unit 102 cooperate with each other to support specifications and forms of mainboards required in different scenarios. A same computing device 100 may include one basic computing unit 101 and one extension unit 102. The same computing device 100 may alternatively include a plurality of basic computing units 101 and one extension unit 102. The same computing device 100 may alternatively include one basic computing unit 101 and a plurality of extension units 102.

The basic computing unit 101 includes a processor 1011, a memory 1012, an external interface 1013, and a related power supply (which is not shown in FIG. 1), and may provide a general-purpose computing capability. In addition, the basic computing unit 1011 may communicate with an external component (for example, the extension unit 102) of the external basic computing unit 101 through the external interface 1013. Further, a component 103 is a general term of a type of electronic device or electronic equipment, and may be configured to provide expansion of capabilities, for example, storage, input/output (input/output, I/O), and data processing for the basic computing unit 101.

It should be noted that, for ease of differentiation and description, "external" in this embodiment means the outside relative to the basic computing unit 101, and an interface used by the basic computing unit 101 to implement communication with an external component is referred to as an "external interface". In a new architecture, the basic computing unit 101 is communicatively connected to components through a high-speed bus, for example, a PCIe, a compute express link (Compute Express Link, CXL), or a unified bus (unified bus, UB, or Ubus), and is connected to the extension unit 102 through a management interface. In specific implementation, a specific connection manner between the basic computing unit 101 and the component 103, and between the basic computing unit 101 and the extension unit 102 includes: a soft connection manner in which the foregoing connection is implemented through a cable, or a hard connection manner in which the foregoing connection is implemented via a connector.

For example, the processor 1011 is configured to perform processing, for example, data computing, and may be processors of different series such as Kunpeng^{®}, Intel^{®}, and AMD^{®}. Optionally, the basic computing unit 101 may also support a heterogeneous processor, in other words, the basic computing unit 101 may support a plurality of processors of different types. For example, the processor 1011 may be a CPU or any processor such as an application-specific integrated circuit (application-specific integrated circuit, ASIC), a programmable logic device (programmable logic device, PLD), a complex programmable logic device (complex programmable logical device, CPLD), a field-programmable gate array (field-programmable gate array, FPGA), a generic array logic (generic array logic, GAL), a system-on-a-chip (system-on-a-chip, SoC), a software-defined infrastructure (software-defined infrastructure, SDI) chip, or an artificial intelligence (artificial intelligence, AI) chip, or any combination thereof. It should be noted that there may be one or more processors 1011, and a quantity of processors on the basic computing unit 101 may be set based on a service requirement, which is not limited in embodiments.

The memory 1012 may be configured to temporarily store operation data of the processor 1011. For example, the memory 1012 may be implemented via a memory, for example, a synchronous dynamic random access memory (synchronous dynamic random access memory, SDRAM) or a double data rate (double data rate, DDR) memory, or may be implemented via another applicable memory, which is not limited in embodiments.

The external interface 1013 is configured to support data communication between the basic computing unit 101 and the external component or another basic computing unit. For example, as shown in FIG. 1, the interconnection interface 1013 may include, for example, a management interface 1, a high-speed interface 2, and a power interface 3. The management interface 1 may be implemented via a management connector, and the basic computing unit 101 may be connected to the extension unit 102 through the management interface 1. For example, the management interface 1 may be, for example, any one or more of a universal asynchronous transceiver/transmitter (universal asynchronous receiver/transmitter, UART) interface, a serial peripheral interface (serial peripheral interface, SPI), a joint test action group (joint test action group, JTAG) interface, a direct media interface (direct media interface, DMI), and a universal serial bus (universal serial bus, USB) interface, or may be an interface of another type. The high-speed interface 2 may be implemented via a high-speed connector, for example, may be a peripheral component interconnect express (peripheral component interconnect express, PCIe) or a flexible input/output (Flexible I/O) interface. In addition, the basic computing unit 101 may be connected to the external component (for example, a riser, a network adapter, or a hard disk backplane) through the high-speed interface 2, or connected to another basic computing unit through the high-speed interface 2. The power interface 3 may be implemented via an ingress power connector, and may be, for example, a power supply interface that supports a flexible connection and a 12V (V) direct-current voltage. In addition, the basic computing unit 101 may be connected to an ingress power supply 104 through the power interface 3.

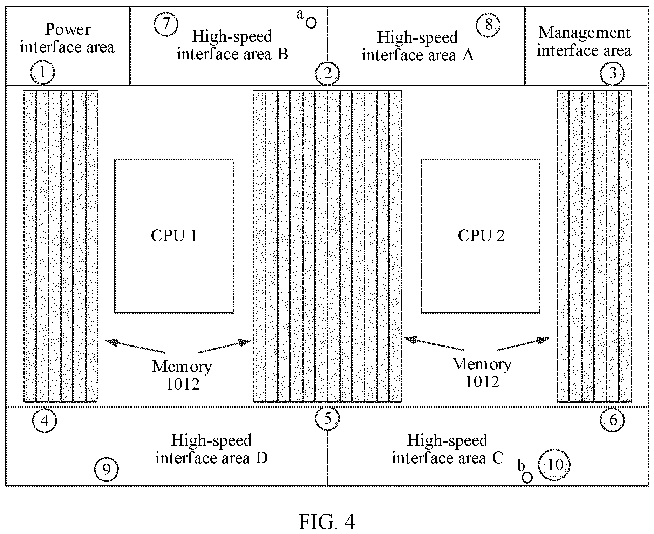

The extension unit 102 includes a baseboard management controller (Baseboard Management Controller, BMC) 1021, is configured to extend a function of the basic computing unit 101, for example, performing running status monitoring, firmware upgrade, entire server heat dissipation monitoring, or component information automatic discovery on the basic computing unit 101, and may be used as a management center of the computing device 100 to provide a secure, efficient, and reliable management function. In actual application, if the computing device 100 is implemented based on an X86 architecture, the extension unit 102 may further include a bridge chip 1022 (for example, a platform controller hub (Platform Controller Hub, PCH) of an Intel system), as shown in FIG. 4.

The component 103 may provide expansion of capabilities for the basic computing unit 101. For example, the component 103 may include, for example, one or more of a storage unit (STorage Unit, STU) 1031, an I/O unit (Input/Output Unit, IOU) 1032, an acceleration unit (ACceleration Unit, ACU) 1033, a heat dissipation component 1034, a memory expansion unit (Memory Expansion Unit, MEU) 1035, a computing component, or a management component, or may be another applicable component. This is not limited in this embodiment. The storage unit 1031 may be, for example, a hard disk backplane, or a PCIe switch (switch) chip on the hard disk backplane, is a storage expansion of the computing device 100, and supports a plurality of media and forms such as a hard disk drive (hard disk drive, HDD)/a solid-state drive (solid-state drive, SSD)/a non-volatile memory express (Non-Volatile Memory express, NVMe)/a storage class memory (Storage Class Memory, SCM). The I/O unit 1032 includes components such as a riser (riser) card, implements I/O expansion for the computing device 100, and supports a standard PCIe card and an open compute project (open compute project, OCP) card. The acceleration unit 1033 may provide acceleration unit extension and interconnection functions for the computing device 100, for example, an acceleration card of a standard PCIe card type or an acceleration module of a non-standard form. The heat dissipation component 1034 is configured to dissipate heat for the computing device 100 or hardware in the computing device 100, including a combination of several heat dissipation manners such as air cooling heat dissipation, liquid cooling heat dissipation, or a combination of the two. It should be understood that a structure, a type, and a quantity of the heat dissipation components 1034 do not constitute a limitation on the technical solutions to be protected in this application. The memory component 1035 includes a memory expansion chip, a dual in-line memory module (dual in-line memory module, DIMM), an SCM medium, and the like, and provides functions of extending a memory bandwidth and a content capacity for the computing device 100. The computing component is a device that provides a general-purpose computing capability, for example, a central processing unit (central processing unit, CPU), or a memory. The management component is a device that provides device management, for example, a baseboard management controller.

In addition, the basic computing unit 101 is provided with a mounting structure, for example, may be mounting holes or a fastener component. In addition, the basic computing unit 101 is fastened to a fastening structure of a chassis via the mounting structure, so that the basic computing unit is fastened to the chassis. In actual application, the computing device 100 may be used in different scenarios. This may require adjustment of a size and a hardware configuration of the basic computing unit 101 in the computing device 100. For example, a basic computing unit that includes one processor is adjusted to a basic computing unit that includes two processors, so that computing power of the computing device 100 is improved. Generally, the entire server vendor needs to re-develop a basic computing unit 101 of a new specification for a changed application scenario. In addition, for the basic computing unit 101 of the new specification, not only a position of the mounting structure on the basic computing unit 101 changes, but also a size of the newly developed basic computing unit 101 changes accordingly. Consequently, the entire server vendor also needs to re-develop a chassis that is used to mount the basic computing unit 101, to adapt to the newly developed basic computing unit 101. This leads to high development costs of the entire server vendor.

On this basis, the mounting structure on the basic computing unit 101 provided in embodiments of this application may be standardized, to reuse the fastening structure on the chassis. Positions of mounting structures on basic computing units 101 of different sizes may be disposed in an overlapping manner. Therefore, when the basic computing unit 101 on the chassis needs to be replaced, a basic computing unit 101 of another size may be mounted on the chassis by using the mounting structure with an overlapping position, so that compatibility of the chassis with the basic computing units 101 of the different sizes can be improved. In this way, when the basic computing unit 101 on the chassis is replaced, the chassis does not need to be re-developed to adapt to a new basic computing unit, so that development costs and a development periodicity of the entire server vendor can be reduced.

In addition, because the BMC, the component 103, and the like are deployed outside the basic computing unit 101, decoupling between the BMC, the component 103, and the like and the basic computing unit 101 may be implemented. Therefore, when the BMC or the component is updated due to a differentiated requirement, the basic computing unit 101 does not need to be re-developed, thereby reducing development costs; or when the basic computing unit 101 on the chassis is replaced, a new basic computing unit 101 may reuse the component 103, thereby improving a reuse rate of the component 103.

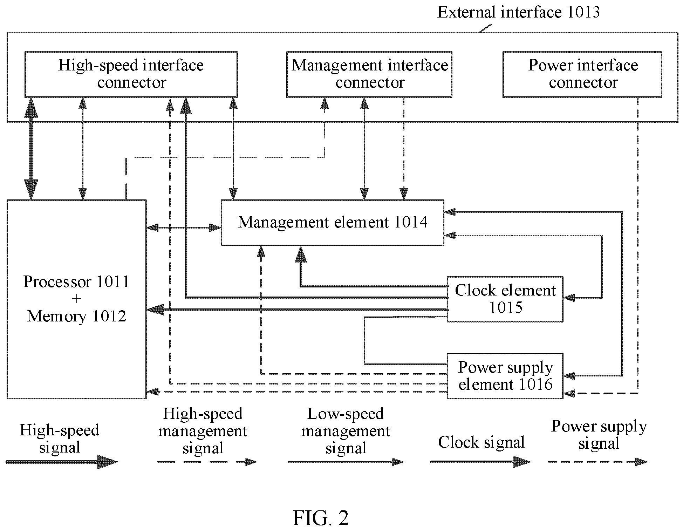

It should be noted that FIG. 1 shows main elements on the basic computing unit 101. In an actual application scenario, the basic computing unit 101 may not only include the elements (or referred to as devices or electronic devices) shown in FIG. 1, but also include a management element 1014, a clock element 1015, and a power supply element 1016, and different elements may communicate with each other through corresponding interfaces, as shown in FIG. 2. The management element 1014 may include, for example, a complex programmable logic device (complex programmable logic device, CPLD), a memory, a sensor, and a related I/O communication interface, and may implement the following functions: 1. a running status of the basic computing unit 101; 2. querying maintenance information of the basic computing unit 101, for example, an electronic label, an identifier, a voltage, and a temperature; 3. upgrading a software version, for example, upgrading basic input output system (basic input output system, BIOS) firmware, CPLD firmware, memory information, and clock firmware; 4. identifying a high-speed interface mode, sideband signal switching, and BMC_I2C extension; 5. synchronizing information between the basic computing unit 101 and the extension unit 102; and 6. performing power-on and power-off management for the basic computing unit 101. The clock element 1015 may include, for example, a crystal/crystal oscillator, a phase locked loop (phase locked loop, PLL), and a clock buffer (buffer), and is configured to provide a clock signal for the basic computing unit 101. The power supply element 1016 is classified into an in-band power supply element and an out-of-band power supply element, and is configured to convert a power supply provided by the ingress power supply 104 into a power supply required by each element in the basic computing unit 101 (where voltages of power supplies required by different elements may be different).

In actual application, based on a service requirement and a hardware attribute, embodiments of this application provide at least six types of basic computing units 101 in different forms, for different computing performance and memory configurations. For ease of description, the six types of basic computing units 101 are referred to as A1, A2, B1, B2, C1, and C2. In addition to different specifications (where the specification includes a quantity of processors and a memory size), the basic computing units 101 in different forms further have different sizes. A size of the basic computing unit 101 may be determined based on a hardware configuration on the basic computing unit 101, for example, determined based on the quantity of processors and the memory size. In this embodiment, "P" is used to represent the quantity of processors on the basic computing unit 101, where P is an integer greater than 0; and the memory 1012 on the basic computing unit 101 may be specifically implemented by a dual in-line memory module per channel (dual in-line memory module per channel, DIMM Per Channel), and each dual in-line memory module per channel is represented by "DPC". The six types of basic computing units 101 provided in embodiments of this application are shown in Table 1 below.

**Table 1**

| Specification | Depth*width | Application scenario | Size (unit: millimeter) | Thickness of a basic computing unit (unit: millimeter) |
|---|---|---|---|---|
| A1 | D1*a1 | 1P1DPC | 215<D1<315 and 165<a2<215 | 2.0 mm/2.4 mm |
| A2 | D1*a2 | 1P2DPC/1P1DPC | 215<D1<315 and 215<a2<285 | 2.0 mm/2.4 mm |
| B1 | D1*b1 | 2P1DPC/1P2DPC /1P1DPC | 215<D1<315 and 285<b2<365 | 2.0 mm/2.4 mm |
| B2 | D1*b2 | 2P2DPC/2P1DPC /1P2DPC/1P1DP C | 215<D1<315 and 365<b2<430 | 2.0 mm/2.4 mm |
| C1 | D2*c1 | 4P1DPC | 410<D2<510 and 285<c1<365 | 2.0 mm/2.4 mm |
| C2 | D2*c2 | 4P2DPC/4P1DPC | 410<D2<510 and 365<c2<430 | 2.0 mm/2.4 mm |

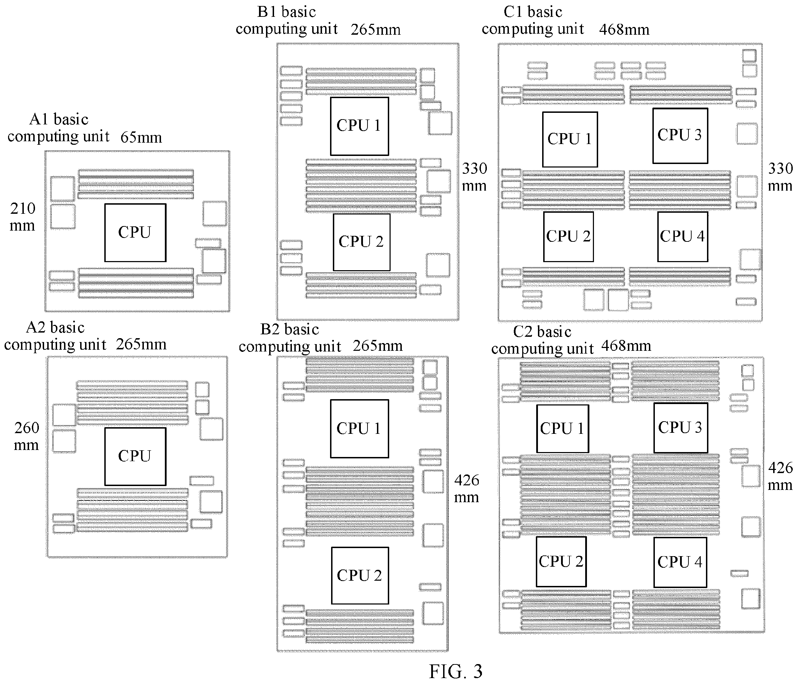

For example, the basic computing unit in the A1 form supports one processor, and each channel is inserted with one DIMM (referred to as 1P1DPC for short). A depth D1 of the basic computing unit ranges from 215 mm (millimeter) to 315 mm, and a width a1 of the basic computing unit ranges from 165 mm to 215 mm. The basic computing unit in the A2 form supports one processor, and each channel is inserted with one or two DIMMs (referred to as 1P1DPC or 1P2DPC for short). A depth D1 of the basic computing unit ranges from 215 mm (millimeter) to 315 mm, and a width a2 of the basic computing unit ranges from 215 mm to 285 mm. The basic computing unit in the B1 form supports two processors, and each channel is inserted with one DIMM (referred to as 2P1DPC for short), or supports one processor, and each channel is inserted with one or two DIMMs (referred to as 1P1DPC or 1P2DPC for short). A depth D1 of the basic computing unit ranges from 215 mm (millimeter) to 315 mm, and a width b1 of the basic computing unit ranges from 285 mm to 365 mm. The basic computing unit in the B2 form supports two processors, and each channel is inserted with one or two DIMMs (referred to as 2P1DPC or 2P2DPC for short), or supports one processor, and each channel is inserted with one or two DIMMs (referred to as 1P1DPC or 1P2DPC for short). A depth D1 of the basic computing unit ranges from 215 mm (millimeter) to 315 mm, and a width b2 of the basic computing unit ranges from 365 mm to 430 mm. The basic computing unit in the C1 form supports four processors, and each channel is inserted with one DIMM (referred to as 4P1DPC for short). A depth D1 of the basic computing unit ranges from 410 mm (millimeter) to 510 mm, and a width c1 of the basic computing unit ranges from 285 mm to 365 mm. The basic computing unit in the C2 form supports four processors, and each channel is inserted with one or two DIMMs (referred to as 4P1DPC or 4P2DPC for short), or supports two processors, and each channel is inserted with one or two DIMMs (referred to as 2P1DPC or 2P2DPC for short). A depth D2 of the basic computing unit ranges from 410 mm (millimeter) to 510 mm, and a width c2 of the basic computing unit ranges from 365 mm to 430 mm. For example, a possible implementation of the basic computing unit 101 in the A1 form to the basic computing unit 101 in the C2 form may be shown in FIG. 3. It should be noted that a plurality of forms of the basic computing units 101 shown in Table 1 do not constitute a limitation on the technical solutions of this application. For example, in actual application, the basic computing unit 101 may further include another quantity of processors or memory of another size, and a thickness of the basic computing unit 101 may alternatively be another value, for example, 2.8 mm.

In this embodiment, a plurality of different areas may be defined on the basic computing unit 101, and are respectively used to deploy different elements on the basic computing unit 101. The plurality of areas on the basic computing unit 101 may be determined based on a cabling layout of each element on the basic computing unit 101, so that cabling between the elements on the basic computing unit 101 is the shortest, or cabling corresponding to different elements on the basic computing unit 101 does not cross, for example, cabling between the processor 1012 on the basic computing unit 101 and the external interface is shortest or does not cross. Alternatively, the plurality of different areas on the basic computing unit 101 may be defined based on a hardware configuration on the basic computing unit 101. For example, for the processor 1011 and the memory 1012 of the basic computing unit 101, a processor memory area may be defined on the basic computing unit 101, and the processor 1011 and the memory 1012 are deployed in the area. Other areas on the basic computing unit 101 may be used for deployment of the external interface 1013 and the like on the basic computing unit 101. Certainly, the plurality of areas may alternatively be defined on the basic computing unit 101 based on both the cabling layout and a quantity of hardware, which is not limited in this embodiment.

In an implementation example, the basic computing unit 101 includes a first area, a second area, and a third area, and the third area is located between the first area and the second area. External interfaces 1013 may be located in the first area and the second area on the basic computing unit 101, and the processor 1011 and the memory 1012 are located in the third area. In other words, the processor 1011 and the memory 1012 are deployed in the middle of the basic computing unit 101, and the external interfaces 1013 are deployed on two sides of the basic computing unit 101.

For ease of understanding, the following further describes various non-limiting implementations of the basic computing unit 101 provided in this application with reference to the accompanying drawings.

For example, FIG. 4 is a schematic diagram of a structure of an example of a basic computing unit 101 in a B2 form according to an embodiment of this application. As shown in FIG. 4, the basic computing unit 101 includes a CPU 1, a CPU 2, memories 1012, and a plurality of external interfaces, and such components may be deployed in different areas on the basic computing unit 101.

The basic computing unit 101 may include a CPU memory area, a power interface area, a management interface area (which may also be referred to as a low-speed interface area), and a high-speed interface area A to a high-speed interface area D. The CPU memory area is the foregoing third area. The power interface area, the management interface area, and the high-speed interface areas A and B are the foregoing first area. The high-speed interface areas C and D are the foregoing second area.

The CPU memory area is used for deployment of the CPU 1, the CPU 2, and the memories 1012. Optionally, the CPU 1, the CPU 2, and the memories 1012 may be symmetrically distributed in the CPU memory area. For example, a central point of the basic computing unit 101 is used as a base point to perform a central symmetric layout. The power interface area is used for deployment of a power interface. The management interface area is used for deployment of a management interface. The high-speed interface areas A to D are used for deployment of high-speed interfaces, and one or more high-speed interfaces may be deployed in each high-speed interface area, to implement high-speed communication between the basic computing unit 101 and a plurality of external components. The high-speed interface areas B and D may be used as high-speed connector (where a high-speed connector is used to implement a high-speed interface) layout areas of the CPU 1; and the high-speed interface areas A and C may be used as high-speed connector (where a high-speed connector is used to implement a high-speed interface) layout areas of the CPU 2. For example, positions of high-speed interface areas on the basic computing unit 101 may be determined based on deployment positions of the CPU 1 and the CPU 2, so that cabling between the CPU and the high-speed interface is the shortest and does not cross. It should be noted that a plurality of function areas defined in FIG. 4 are merely used as an example for description. In another embodiment, a plurality of function areas on the basic computing unit 101 in the B2 form may also be defined in another form. For example, the management interface area is adjacent to the power interface area.

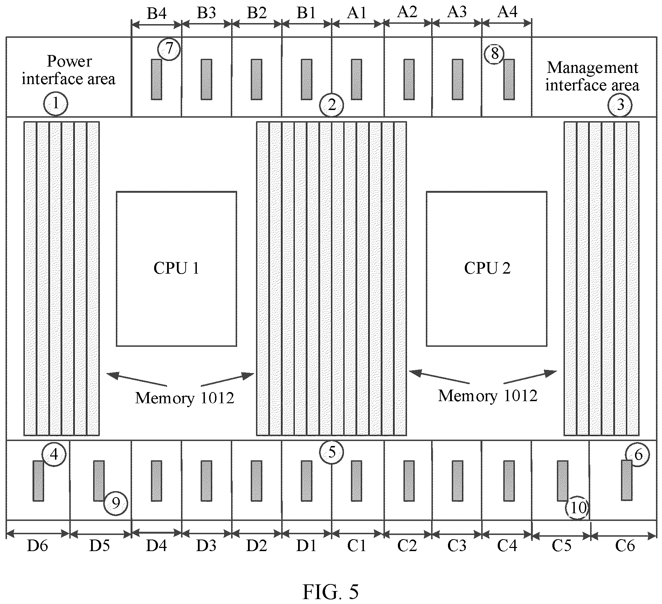

In a further implementation example, a plurality of high-speed interfaces may be deployed in each high-speed interface area. For example, as shown in FIG. 5, four high-speed interfaces may be deployed in the high-speed interface area A at an equal spacing, and the four high-speed interfaces are respectively A1 to A4. Similarly, high-speed interfaces B1 to B4 may be deployed at an equal spacing in the high-speed interface area B; high-speed interfaces C1 to C6 may be deployed at an equal spacing in the high-speed interface area C; and high-speed interfaces D1 to D6 may be deployed at an equal spacing in the high-speed interface area D. For example, a spacing between different high-speed interfaces in a same high-speed interface area may be, for example, 35 mm, so that an external component is inserted into the basic computing unit 101 or is pulled out from the basic computing unit 101 through the high-speed interface. In another embodiment, the spacing between the different high-speed interfaces may also be another value.

In addition, a plurality of mounting holes (where the mounting hole is the foregoing mounting structure) for fastening the basic computing unit 101 to a chassis are further provided on the basic computing unit 101. The mounting holes may be disposed based on a hardware spacing and a stress factor. The hardware spacing includes spacings between different elements disposed on the basic computing unit 101, such as a spacing between a CPU and a memory. The stress factor is mainly used to avoid deformation of the basic computing unit 101 when a computing device 100 falls or the basic computing unit 101 is pressed by another external force, including a bearing force between the basic computing unit 101 and the chassis, a bearing force between the basic computing unit 101 and a lining board, and the like. In addition, the stress factor may further include a size (for example, a depth) of the basic computing unit 101, and impact of component plugging in or pulling out from the basic computing unit. For example, violent component plugging in or pulling out causes deformation of the basic computing unit 101.

In this embodiment, an example in which the mounting structure is specifically the mounting hole is used. At least one of the following manners may be used for a position of the mounting structure of the basic computing unit 101.

Manner 1: The position of the mounting structure is determined based on positions of the CPU 1, the CPU 2, and the memories 1012 that are on the basic computing unit 101, and each external interface on the basic computing unit 101, so that the mounting hole has little (or minimal) impact on elements on the basic computing unit 101.

Manner 2: A distance between different mounting holes may be an integer multiple of 10 millimeters. Certainly, the distance may alternatively be another value, for example, an integer multiple of 15 mm or an integer multiple of 20 mm. In this way, when the basic computing unit 101 is mounted, it is convenient to determine a corresponding fastening position on the chassis, so that different fastening positions may be set for basic computing units in different forms, thereby improving a reuse rate of the chassis (and a lining board).

Manner 3: A distance between adjacent mounting holes on the basic computing unit 101 does not exceed a preset range. The preset range may be, for example, 100 mm to 150 mm, for both a horizontal hole spacing and a vertical hole spacing. In this way, after the basic computing unit 101 is mounted on the chassis via these mounting holes, the distance between the mounting holes can reduce impact of stress (for example, stress generated when an external component is plugged into or pulled out from the basic computing unit 101) on deformation of the basic computing unit 101, and the like.

In actual application, the mounting holes may meet a plurality of manners above. For example, when the mounting holes are provided on the basic computing unit 101, initial positions of the mounting holes may be preliminarily determined based on positions of the CPUs, the memory, and the external interfaces, and then the initial positions of the mounting holes are adjusted based on the foregoing conditions, or the spacings between the mounting holes are not beyond the preset range when the spacing is an integer multiple of 10 mm. In addition, the mounting holes on the basic computing unit 101 may also meet another condition, which is not limited in this embodiment.

In FIG. 4, for example, 10 mounting holes are provided, and are numbered 1 to 10 respectively, so that the basic computing unit 101 may be mounted on the chassis via the 10 mounting holes. For example, the basic computing unit 101 may be mounted on the chassis by using screws and nuts that pass through the mounting holes. As shown in FIG. 4, the mounting holes 1 to 6 may be symmetrically distributed on the basic computing unit 101. The mounting holes 1 to 3 are all depth I and have different widths, and the mounting holes 4 to 6 are all depth II and have different widths on the basic computing unit 101. The mounting holes 7 to 10 may also be symmetrically distributed from the perspective of a width. The mounting holes 7 and 8 are both depth III and have different widths on the basic computing unit 101, and the mounting holes 9 and 10 are both depth IV and have different widths on the basic computing unit 101. In addition, the mounting holes 1 to 10 may be deployed in idle positions in the power interface area, the management interface area, and the high-speed interface area except interface positions, so that both CPUs, the memories 1012, and the external interfaces are not affected.

In a further possible implementation, at least one guide hole may be further provided on the basic computing unit 101, so that when the basic computing unit 101 is mounted on the chassis, the guide hole may be used to limit guiding of the basic computing unit 101, thereby avoiding collision between a device (for example, a CPU or a memory) on the basic computing unit 101 and a part of the chassis due to an excessive displacement during mounting (that is, avoiding component collision). In addition, the guide hole also helps implement alignment between the basic computing unit 101 and the mounting holes on the chassis. This improves mounting efficiency and a mounting effect. For example, two guide holes may be provided on the basic computing unit 101. A guide hole a and a guide hole b shown in FIG. 4 are respectively located in the high-speed interface area B and the high-speed interface area C.

In this embodiment, the following two implementation examples of mounting the basic computing unit 101 on the chassis are provided.

Manner 1: The basic computing unit 101 may be mounted on the chassis via a lining board (also referred to as a front panel).

The lining board is a device used to fasten the basic computing unit 101 in a process of mounting the basic computing unit 101. In addition, when the basic computing unit 101 is fastened to the lining board, the lining board may further protect the basic computing unit 101, for example, may avoid damage to the basic computing unit 101 caused by collision between the basic computing unit 101 and another component.

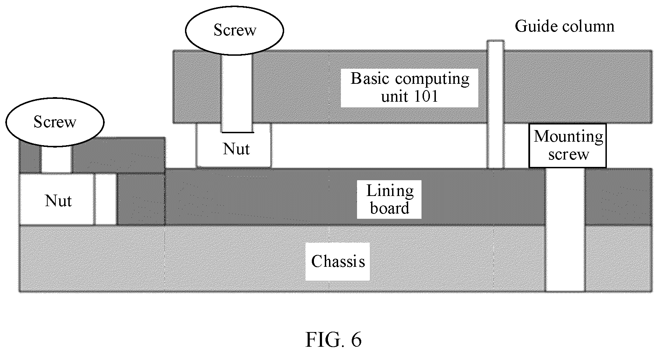

Specifically, as shown in FIG. 6, a basic computing unit 101 may be mounted on a lining board via a nut, a screw that passes through a mounting hole on the basic computing unit 101, and a guide column that passes through a guide hole on the basic computing unit 101. In addition, the lining board may be mounted on a chassis via a screw, a nut, and a mounting screw, so that the basic computing unit 101 is mounted on a chassis. It should be noted that FIG. 6 is mainly used to show a mounting manner between the basic computing unit 101, the lining board, and the chassis. In actual application, quantities of screws, nuts, and guide columns used for fastening and mounting the basic computing unit 101 on the lining board, and quantities of screws, nuts, and mounting screws used for fastening and mounting the lining board on the chassis are not limited to the example in FIG. 5.

Because the basic computing unit 101 is fastened to and mounted on the chassis via the lining board, decoupling between the basic computing unit 101 and the chassis can be implemented. In this way, a fastening structure of the chassis can be reused based on overlapping mounting holes, and basic computing units 101 of different sizes may be mounted in a compatible manner. It may be understood that, because a rear face of the basic computing unit 101 may be in contact with the nut or the mounting screw, an area that may be in contact with the nut and the mounting screw and that is in the rear face of the basic computing unit 101 may be set as a bright copper keep-out area, to avoid a problem, for example, a short circuit or a circuit abnormality of a circuit on the basic computing unit 101 caused by a physical connection between the basic computing unit 101 and the nut or the mounting screw, where the problem affects normal running of the basic computing unit 101.

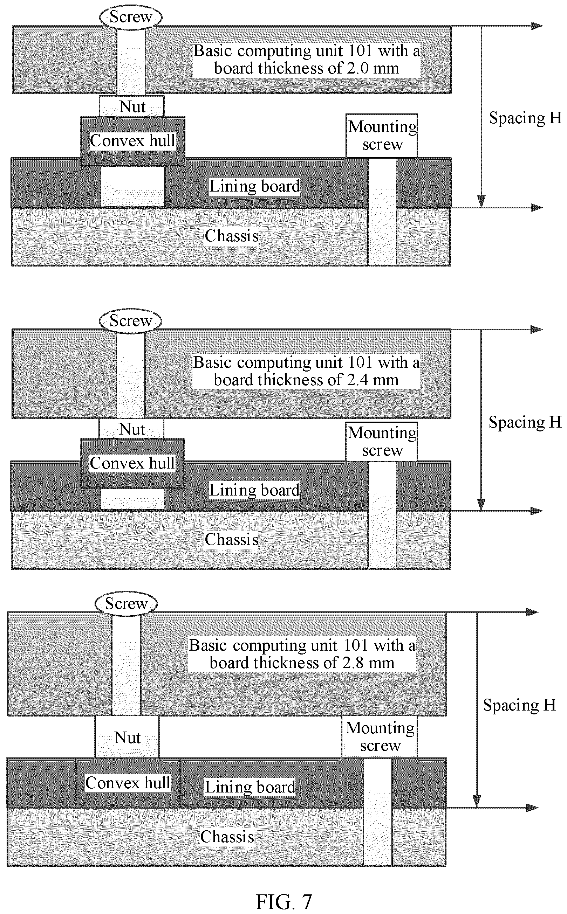

In an actual application scenario, because a printed circuit board (printed circuit board, PCB) has different materials and different cabling layers, basic computing units 101 of a same specification may have different thicknesses. On this basis, in a further possible implementation, a convex hull height of a self-clinching nut part on the lining board may be adjusted, so that an effective spacing between surfaces of the basic computing units 101 of different thicknesses and the chassis can be maintained, and components on the basic computing units 101 can be compatible in a spatial structure. As shown in FIG. 7, a convex hull height of a self-clinching nut part on a lining board is adjusted, and spacings between the lining board and a basic computing unit 101 with a board thickness of 2.0 mm, a basic computing unit 101 with a board thickness of 2.4 mm, and a basic computing unit 101 with a board thickness of 2.8 mm may be all kept as a spacing H, so that the lining board is compatible with the basic computing units 101 with different board thicknesses.

Manner 2: The basic computing unit 101 may be directly mounted on the chassis.

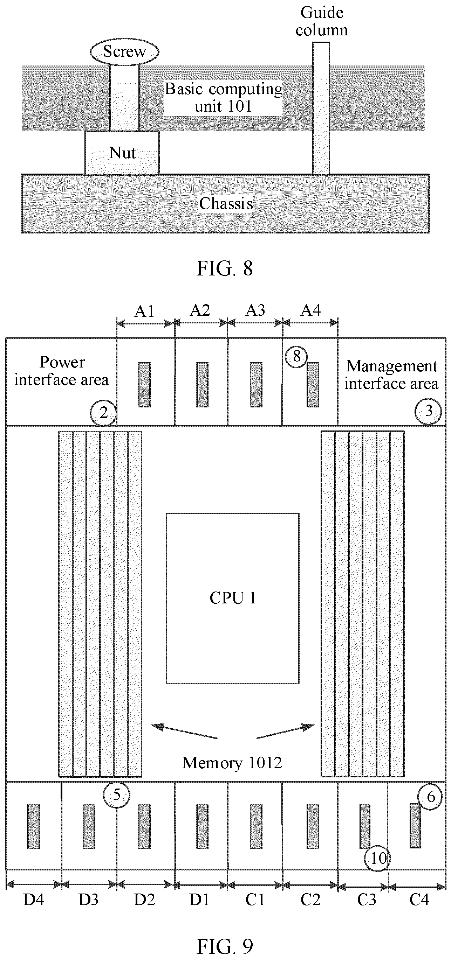

Specifically, as shown in FIG. 8, a basic computing unit 101 may be mounted on a chassis via a nut, a screw that passes through a mounting hole on the basic computing unit 101, and a guide column that passes through a guide hole on the basic computing unit 101. FIG. 8 is mainly used to show a mounting manner between the basic computing unit 101 and the chassis. In actual application, quantities of screws, nuts, and guide columns that are used for fixing and mounting the basic computing unit 101 on the chassis are not limited to the example in FIG. 8.

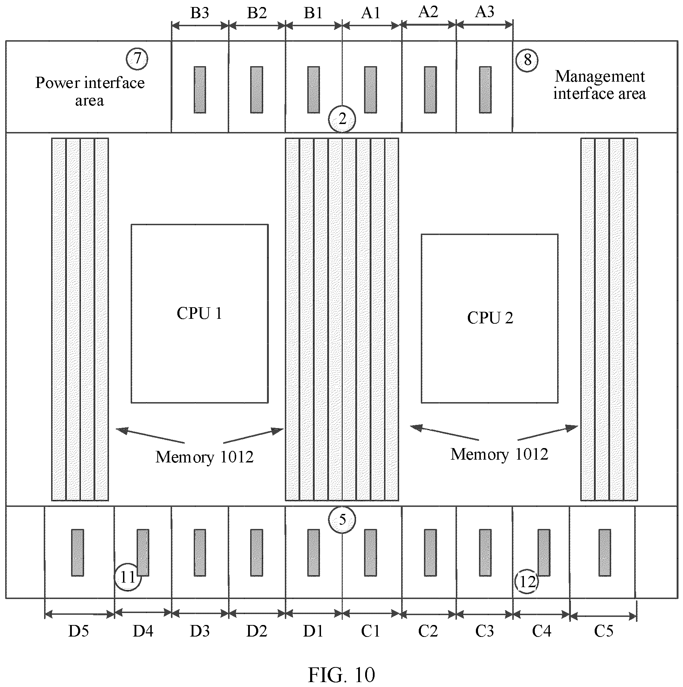

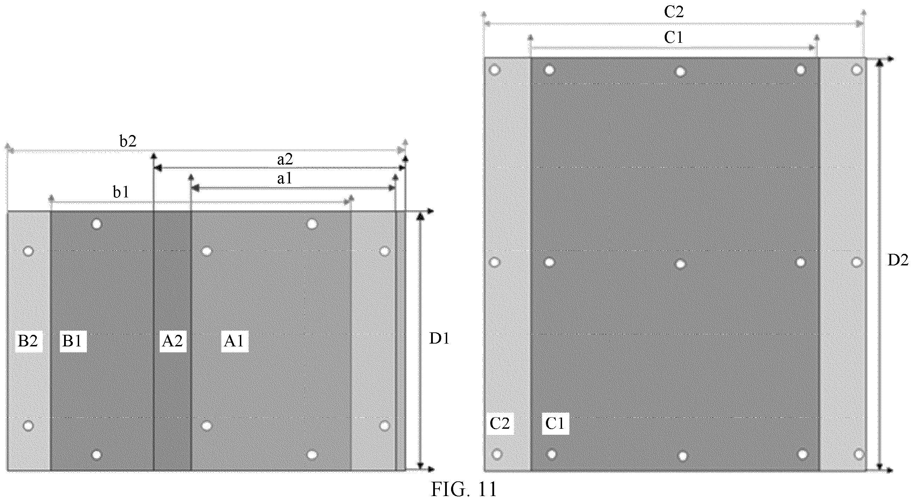

It should be noted that, in this embodiment, a basic computing unit 101 in a B2 form is used as an example to describe specific implementation of the basic computing unit 101, and a mounting structure on the basic computing unit 101 is described by using a mounting hole as an example. In actual application, basic computing units in A1, A2, B1, C1, and C2 forms may also be implemented in a manner similar to the foregoing manner. For example, in the basic computing unit 101 in the A2 form shown in FIG. 9 and the basic computing unit 101 in the B1 form shown in FIG. 10, a plurality of areas may also be defined, and are respectively used for deployment of a CPU, a memory, and an external interface. In addition, a rear mounting hole is further provided on the basic computing unit 101, so that the basic computing unit 101 is mounted on a chassis via the mounting hole. For details, refer to the foregoing descriptions with reference to the accompanying drawings. Details are not described herein again. Mounting structures on basic computing units 101 in different forms overlap. Specifically, a mounting hole is used as an example. A plurality of mounting holes on the basic computing units 101 in the A1 form to the C2 form are shown in FIG. 11. In addition, in actual application, a mounting structure on the basic computing unit 101 may alternatively be implemented via a buckle, a captive screw, or the like, which is not limited in embodiments.

In the foregoing embodiments, a specific implementation and a mounting process of a single basic computing unit are described. In an actual application scenario, a hardware requirement of a computing device 100 may change, for example, computing performance of the computing device 100 needs to be increased. In this case, the hardware requirement of the computing device 100 may be met through interconnecting a plurality of basic computing units. With reference to the accompanying drawings, the following describes in detail a specific implementation process of interconnecting the plurality of basic computing units.

In some implementation examples, when the computing performance of the computing device 100 is improved through interconnecting the plurality of basic computing units, a connection between the plurality of basic computing units and an extension unit may be established in a parallel-connected manner. In this case, the plurality of basic computing units may be all connected to the extension unit. Alternatively, the plurality of basic computing units may be connected to the extension unit in series. In this case, only one of the plurality of basic computing units is connected to the extension unit.

The following respectively describes two interconnection manners of the basic computing units with reference to the accompanying drawings.

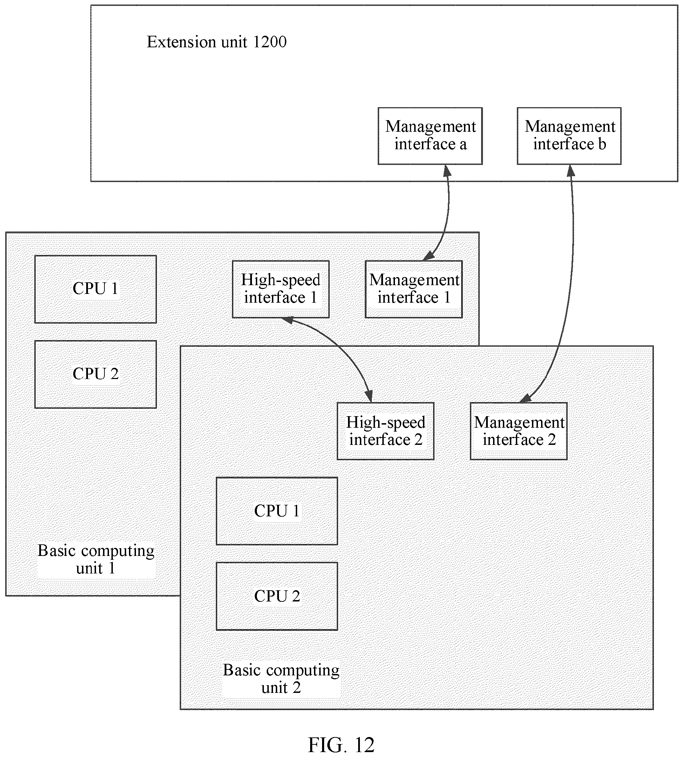

FIG. 12 is a schematic diagram of interconnecting two basic computing units each in a B2 form in parallel. As shown in FIG. 12, two CPUs are configured on each of a basic computing unit 1 and a basic computing unit 2, and are respectively identified as a CPU 1 and a CPU 2. A management interface 1 and a high-speed interface 1 are disposed on the basic computing unit 1. A management interface 2 and a high-speed interface 2 are disposed on the basic computing unit 2. The basic computing unit 1 is interconnected with the basic computing unit 2 through the high-speed interface 1 and the high-speed interface 2. In addition, the basic computing unit 1 may be connected to an extension unit 1200 through the management interface 1 and a management interface a on the extension unit 1200. The basic computing unit 2 may be connected to the extension unit 1200 through the management interface 2 and a management interface b on the extension unit 1200.

When managing the basic computing unit 1 and the basic computing unit 2, the extension unit 1200 may identify primary and secondary identities of the basic computing units through the management interface a and the management interface b. A primary basic computing unit may be configured to process a part of services that are on the computing device 100, and a secondary basic computing unit is configured to process another part of the services that are on the computing device 100. Alternatively, the primary basic computing unit and the secondary basic computing unit may process a same service on the computing device 100. In this embodiment, when managing basic computing units, the extension unit 1200 may distinguish between primary and secondary identity of the basic computing units. In an implementation example, the following case may be set: An identity of the basic computing unit 1 that is connected to the extension unit 1200 through the management interface a is primary, and an identity of the basic computing unit 2 that is connected to the extension unit 1200 through the management interface b is secondary, to implement primary-secondary identity identification of the basic computing unit 1 and the basic computing unit 2. Optionally, the extension unit 1200 may alternatively determine primary and secondary identities of basic computing units based on an access sequence of the basic computing units, or the like, which is not limited in this embodiment.

Because identifiers of CPUs on the basic computing unit 1 and the basic computing unit 2 overlap, after determining the primary and secondary identities of the basic computing unit 1 and the basic computing unit 2, the extension unit 1200 may adjust the identifiers (such as numbers of the CPUs) of the CPUs on both basic computing units, to manage the CPUs on the basic computing unit 1 and the basic computing unit 2. For example, after adjustment, the identifiers of the CPUs on the basic computing unit 1 are a CPU 1 and a CPU 3, and the identifiers of the CPUs on the basic computing unit 2 are a CPU 2 and a CPU 4. In this way, when managing the CPUs on both the basic computing units, the extension unit 1200 may accurately locate all the CPUs based on the identifiers of the CPUs, to use different CPUs to execute different services (certainly, different CPUs may alternatively be used to execute a same service). In addition, the extension unit 1200 may further manage an interconnection topology of CPUs. For example, the extension unit 1200 may update a topology structure in which two CPUs are interconnected to a topology structure in which four CPUs are interconnected. In another implementation, the basic computing unit 1 and the basic computing unit 2 may alternatively adjust identifiers of respective CPUs. For example, after the basic computing unit 1 is determined to have the primary identity, the basic computing unit 1 may change an identifier of a CPU from a CPU 2 to a CPU 3 (where a CPU 1 is unchanged by default) according to a preconfigured adjustment rule; and after the basic computing unit 2 is determined to have the secondary identity, the basic computing unit 2 may change identifiers of CPUs from a CPU 1 to a CPU 2 and from a CPU 2 to a CPU 4 according to the preconfigured adjustment rule.

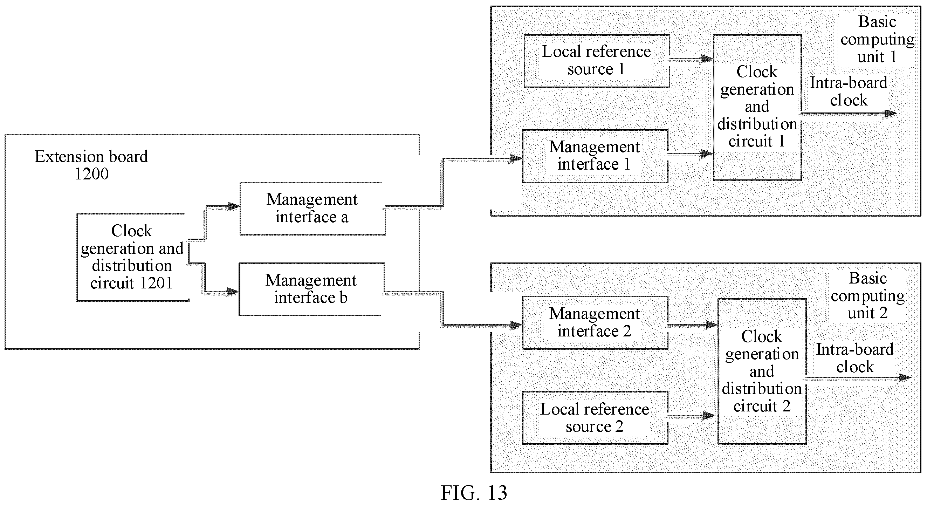

In addition, the extension unit 1200 may further synchronize clocks of the basic computing unit 1 and the basic computing unit 2, so that a same clock source of the basic computing unit 1 and the basic computing unit 2 is implemented. During specific implementation, as shown in FIG. 13, a local clock generation and distribution circuit 1201 of an extension unit 1200 may generate a local clock, and send a clock signal to a basic computing unit 1 and a basic computing unit 2 through a management interface a and a management interface b. In this way, a clock generation and distribution circuit 1 on the basic computing unit 1 may perform phase synchronization between a clock signal generated by a local reference source 1 (for example, a crystal oscillator) and the clock signal received through a management interface 1, so that a clock on the basic computing unit 1 is consistent with a clock on the extension unit 1200. In addition, a clock generation and distribution circuit 2 on the basic computing unit 2 may perform phase synchronization between a clock signal generated by a local reference source 2 and the clock signal received through a management interface 2, so that a clock on the basic computing unit 2 is consistent with the clock on the extension unit 1200. In this way, a same clock source of the basic computing unit 1 and the basic computing unit 2 can be implemented.

After primary and secondary identities of the basic computing unit 1 and the basic computing unit 2 are determined, the basic computing unit 1 (with the primary identity) may transmit a sideband signal (for example, a low-speed sideband signal) to the basic computing unit 2 through a high-speed interface, for example, a synchronous reset signal between CPUs, or an inter-integrated circuit (inter-integrated circuit, I2C) signal between the CPUs. For example, the low-speed sideband signal may be defined, and a specific type of low-speed sideband signal may be identified as the synchronous reset signal, the I2C signal, or the like sent by the basic computing unit 1. The synchronous reset signal between the basic computing unit 1 and the basic computing unit 2 is used as an example. A CPLD on the basic computing unit 1 may send the reset signal to the basic computing unit 2 through a high-speed interface 1 based on the primary identity of the basic computing unit 1. Correspondingly, a CPLD on the basic computing unit 2 may receive the reset signal through a high-speed interface 2 based on the secondary identity of the basic computing unit 2, and execute reset logic by using the reset signal, to implement synchronous reset between the basic computing unit 1 and the basic computing unit 2.

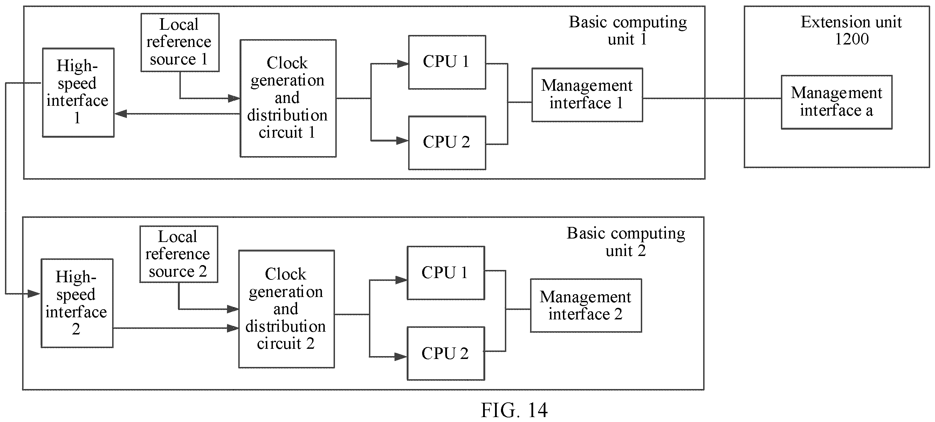

In the embodiment shown in FIG. 12, a specific implementation of interconnecting the basic computing unit 1 and the basic computing unit 2 is described by using an example in which both the basic computing unit 1 and the basic computing unit 2 are coupled in parallel to the extension unit 1200 through management interfaces. FIG. 14 is a schematic diagram of interconnecting two basic computing units each in a B2 form in series. As shown in FIG. 14, two CPUs are configured on each of a basic computing unit 1 and a basic computing unit 2, and are respectively identified as a CPU 1 and a CPU 2. A management interface 1 and a high-speed interface 1 are disposed on the basic computing unit 1. A management interface 2 and a high-speed interface 2 are disposed on the basic computing unit 2.

The basic computing unit 1 is connected to an extension unit 1200 through the management interface 1 and a management interface a on the extension unit 1200. The basic computing unit 1 is interconnected with the basic computing unit 2 through the high-speed interface 1 and the high-speed interface 2. Different from the embodiment shown in FIG. 12, in this embodiment, only one management interface a may be disposed on the extension unit 1200, and the basic computing unit 2 may not be connected to the extension unit 1200 via the management interface 2.

Correspondingly, when the extension unit 1200 manages the basic computing unit 1 and the basic computing unit 2, an identity of the basic computing unit 1 that is connected to the extension unit 1200 through the management interface a is determined as primary, and an identity of the basic computing unit 2 that is not connected to the extension unit 1200 through the management interface is determined as secondary, to implement primary-secondary identity identification of the basic computing unit 1 and the basic computing unit 2. Further, the extension unit 1200 may further adjust identifiers of the CPUs on the basic computing unit 1 and the basic computing unit 2 based on the primary and secondary identities of the basic computing unit 1 and the basic computing unit 2. For example, after adjustment, the identifiers of the CPUs on the basic computing unit 1 are a CPU 1 and a CPU 3, and the identifiers of the CPUs on the basic computing unit 2 are a CPU 2 and a CPU 4. In addition, the extension unit 1200 may further manage an interconnection topology of CPUs. For example, the extension unit 1200 may update a topology structure in which two CPUs are interconnected to a topology structure in which four CPUs are interconnected.

In addition, when primary-secondary clock synchronization between the basic computing unit 1 and the basic computing unit 2 is implemented, a local reference source 1 on the basic computing unit 1 may generate a local clock, and send a signal of the local clock to the basic computing unit 2 through the high-speed interface 1 via a clock generation and distribution circuit 1. A clock generation and distribution circuit 2 on the basic computing unit 2 may use the clock signal received through the high-speed interface 2 as an intra-board clock, so that the clock on the basic computing unit 1 is consistent with the clock on the basic computing unit 2. In this way, a same clock source of the basic computing unit 1 and the basic computing unit 2 can be implemented.

In actual application, when the basic computing unit 1 and the basic computing unit 2 are interconnected through high-speed interfaces, a sideband signal may be transmitted through the high-speed interfaces. Therefore, in an implementation example, the basic computing unit 1 may use a clock signal as the sideband signal, and send the sideband signal to the basic computing unit 2 through the high-speed interface 1. Correspondingly, the basic computing unit 2 may receive the sideband signal through the high-speed interface 2, in other words, receive the clock signal sent by the basic computing unit 1. In addition, the basic computing unit 1 may also send a reset signal, and a management signal that is of the extension unit 1200 to the basic computing unit 2 through the high-speed interface 1 and the high-speed interface 2.

In another implementation example, an inter-board interconnection interface may be further independently disposed between the basic computing unit 1 and the basic computing unit 2. The inter-board interconnection interface may be, for example, an inter-integrated circuit (inter-integrated circuit, I2C) interface, a serial peripheral interface (serial peripheral interface, SPI) interface, or another interface, so that the basic computing unit 1 may send a signal, for example, a management signal, a clock signal, and a reset signal to the basic computing unit 2 through the inter-board interconnection interface. In embodiments, a signal interaction manner between the basic computing unit 1 and the basic computing unit 2 is not limited.

Further, based on the manner shown in FIG. 12 or FIG. 14, when a plurality of basic computing units are interconnected, the plurality of basic computing units may be stacked and mounted on a chassis. For example, the plurality of basic computing units may be stacked in a horizontal direction, in other words, the plurality of basic computing units may be mounted at a same height on the chassis. Alternatively, the plurality of basic computing units may be stacked in a vertical direction, in other words, the plurality of basic computing units are mounted at different heights on the chassis, and projections of the plurality of basic computing units in the vertical direction may overlap or overlap. For example, the basic computing unit 1 may be mounted on the chassis (via a lining board), and the basic computing unit 2 may be mounted (via a lining board) on a tray fastened to the chassis. In addition, in embodiments, not only interconnection between a plurality of basic computing units of a same specification may be supported, but also interconnection between basic computing units of different specifications may be supported. For example, a basic computing unit in an A2 form may be interconnected with a basic computing unit in a B2 form, to provide computing performance of three CPUs for a computing device 100.

In embodiments, based on a plurality of basic computing units in a same form or different forms, the general-purpose computing power basic computing units can be stacked, combined, and switched in the computing device 100. The computing device 100 (for example, a server) is deconstructed at an atomic level, and a general-purpose computing power component is standardized, so that the computing device 100 can be not limited by a processor vendor or a processor architecture, thereby truly implementing a decoupling design. In addition, X86 processors of Intel and AMD, or processors of an ARM architecture can be used as standard components, and flexible switching can be implemented. A plurality of general-purpose computing power basic computing units can be stacked to support a 1P/2P/4P combination to meet different computing power requirements.

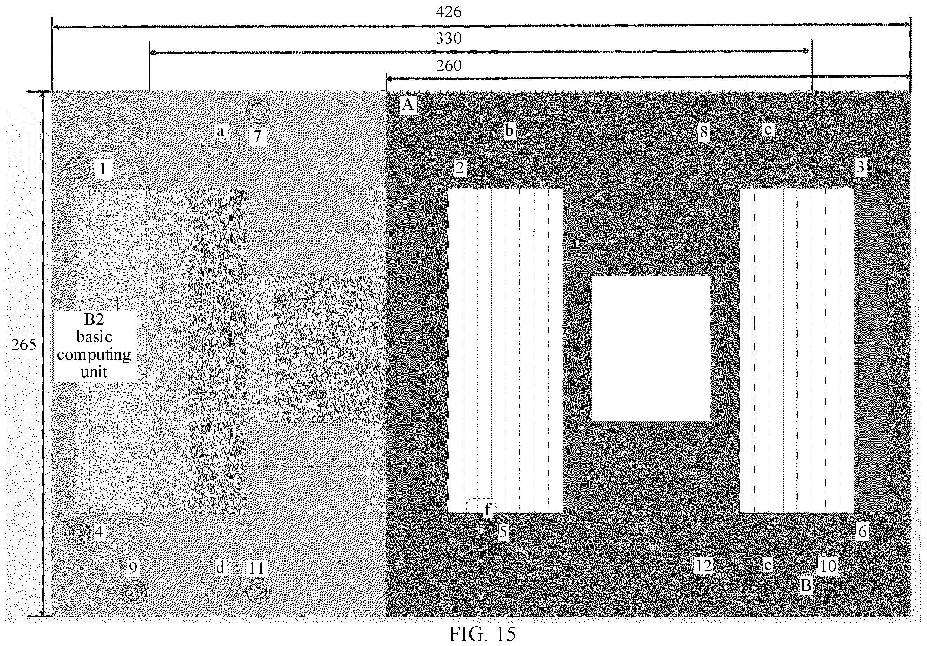

In addition, for ease of understanding, refer to FIG. 15. The following uses three types of basic computing units A2, B1, and B2 as an example to describe a specific implementation of implementing compatibility of mounting holes on the three types of basic computing units.

Manners of mounting a basic computing unit on a chassis include: mounting with a lining board and mounting without a lining board. A manner of mounting with a lining board is used as an example, and a mounting process is as follows.
1. The basic computing unit is aligned with the lining board through a guide hole and a guide column of the lining board, and then the basic computing unit and the lining board are fastened as a whole via a screw. A position and quantity of guide holes/screw holes comply with a requirement of a mounting hole standard (for example, the requirement for setting the mounting hole in the foregoing embodiments).
2. The lining board is mounted, through a mounting screw hole, to a mounting screw that is at the bottom of a standard chassis. Bright copper is avoided at a position that corresponds to the mounting screw hole and that is on a rear face of the basic computing unit, so as to avoid collision during the mounting. To ensure compatibility between the basic computing unit and the chassis, a position of the mounting screw at the bottom of the chassis and a bright copper avoiding area that is on the rear face of the basic computing unit and that is for the mounting screw comply with the requirement of the mounting hole standard.
3. One captive screw on the basic computing unit and a corresponding part of a boss of the chassis are directly tightened. In this way, a mainboard is mounted on and fastened to the chassis. Bright copper is avoided at a position, on a rear face of the basic computing unit, corresponding to the boss of the chassis, to avoid collision during the mounting. A position of the captive screw on the basic computing unit and the position of a bright copper avoiding area on the rear face of the basic computing unit comply with the requirement of the mounting hole standard.

The mounting hole standard is defined, and designs of the basic computing unit and the chassis both comply with the standard. In this way, basic computing units in a same form can be flexibly used in different chassis. In addition, for basic computing units in different forms, the basic computing units in a plurality of forms can further share a same chassis by defining mounting hole compatibility. For example, mounting hole compatibility of the basic computing units A2, B1, and B2 may be shown in FIG. 15.

Screw holes 1 to 10, guide holes A and B, and mounting screw bright copper keep-out areas a, b, c, d, e, and f are defined. For different types of basic computing units, different holes are selected. The chassis design complies with a constrain specification for screws and mounting screws. In this way, a same chassis can support three types of basic computing units: A2, B1, and B2. For mounting holes of the three types of basic computing units A2, B1, and B2, refer to Table 2 below.

**Table 2**

| | A2 basic computing unit | B1 basic computing unit | B2 basic computing unit |
|---|---|---|---|
| Screw | 2, 3, 5, and 6 | 2, 7, 8, 5, 11, and 12 | 1-10, 11, and 12 |
| Screw whose rear face has bright copper | 8, 10, and 12 | \ | 11 and 12 |
| Guide hole | A and B | A and B | A and B |
| Mounting screw bright copper keep-out area | b, c, e, and f | a, b, c, d, e, and f | a, b, c, d, e, and f |

It should be noted that another appropriate step combination that can be figured out by a person skilled in the art based on the content described above also falls within the protection scope of this application. In addition, a person skilled in the art should also appreciate that all embodiments described in this specification are preferred embodiments, and the related actions are not necessarily mandatory to this application.

In a possible embodiment, FIG. 15 is a schematic diagram of a structure of a computing device according to this application. As shown in the figure, the computing device includes a basic computing unit 1601 and an extension unit 1602. Further, the computing device further includes a storage unit 1603, a memory expansion unit 1604, an I/O unit 1605, and a heat dissipation component 1606. The basic computing unit 1601 includes a processor and a memory, and the basic computing unit 1601 may communicate with the extension unit 1602 through an external interface. In addition, the basic computing unit 1601 may further communicate with components such as the storage unit 1603, the memory expansion unit 1604, the I/O unit 1605, and the heat dissipation component 1606 through the external interface.

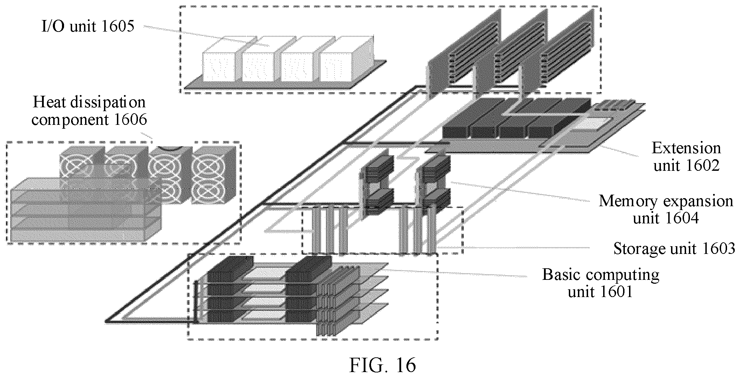

In this embodiment, the basic computing unit 1601 may be further provided with a mounting structure (which is not shown in FIG. 16), for example, a mounting hole, a buckle component, or a captive screw, so that the basic computing unit 1601 is fastened, via the mounting structure, to a chassis on which the basic computing unit is located. A position of the mounting structure on the basic computing unit 1601 is determined based on a processor, a memory, and a stress factor, and positions of mounting structures on basic computing units of different sizes overlap.

The basic computing unit 1601 and the extension unit 1602 in this embodiment correspond to the basic computing unit 101 and the extension unit 102 in the foregoing embodiment. Therefore, for specific implementation of the basic computing unit 1601 and the extension unit 1602, refer to related descriptions in the foregoing embodiment, and details are not described herein again.

In addition, for the storage unit 1603, the memory expansion unit 1604, the I/O unit 1605, and the heat dissipation component 1606 in the computing device, refer to related descriptions of the storage unit, the memory expansion unit, the I/O unit, and the heat dissipation component in the foregoing embodiments. Details are not described herein again.

This application further provides a mainboard. The mainboard may include the basic computing unit 101 or the basic computing unit 1601 described in the foregoing embodiment. For brevity, details are not described herein again.

All or some of the foregoing embodiments may be implemented using software, hardware, firmware, or any combination thereof. When the software is used to implement embodiments, the foregoing embodiments may be implemented completely or partially in a form of a computer program product. The computer program product includes one or more computer instructions. When the computer program instructions are loaded or executed on a computer, all or some of the processes or the functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state drive (solid state drive, SSD).

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A basic computing unit, wherein the basic computing unit comprises a processor and a memory, the basic computing unit communicates with an extension unit through an external interface, and the extension unit is configured to extend a function of the basic computing unit; and
the basic computing unit is further provided with a mounting structure, the basic computing unit is fastened, via the mounting structure, to a chassis on which the basic computing unit is located, a position of the mounting structure on the basic computing unit is determined based on the processor, the memory, and a stress factor, and positions of mounting structures on basic computing units of different sizes overlap.

2. The basic computing unit according to claim 1, wherein the mounting structure comprises a mounting hole, and the mounting structure on the basic computing unit meets one or both of the following conditions:
a distance between different mounting holes on the basic computing unit is an integer multiple of 10 millimeters, or a distance between adjacent mounting holes on the basic computing unit does not exceed a preset range.

3. The basic computing unit according to claim 1 or 2, wherein when the chassis comprises a plurality of basic computing units, the plurality of basic computing units are coupled through a high-speed interface in the external interface.

4. The basic computing unit according to claim 3, wherein a connection between the plurality of basic computing units and the extension unit is established in a parallel-connected manner; or
a connection between the plurality of basic computing units and the extension unit is established in a serial-connected manner.

5. The basic computing unit according to claim 4, wherein when the plurality of basic computing units are connected in parallel to the extension unit, the plurality of basic computing units are coupled to the extension unit through a plurality of management interfaces that are on the extension unit.

6. The basic computing unit according to claim 5, wherein the plurality of basic computing units comprise a first basic computing unit and a second basic computing unit, an identity of the first basic computing unit is primary, and the primary identity of the first basic computing unit is determined via a first management interface that connects the first basic computing unit to the extension unit; and an identity of the second basic computing unit is secondary, and the secondary identity of the second basic computing unit is determined via a second management interface that connects the second basic computing unit to the extension unit.

7. The basic computing unit according to claim 4, wherein when the plurality of basic computing units are connected in series to the extension unit, the plurality of basic computing units are coupled to the extension unit through one management interface that is on the extension unit.

8. The basic computing unit according to claim 7, wherein the plurality of basic computing units comprise a first basic computing unit and a second basic computing unit, an identity of the first basic computing unit is primary, and the primary identity of the first basic computing unit is determined by connecting the basic computing unit to the extension unit; and an identity of the second basic computing unit is secondary, and the secondary identity of the second basic computing unit is determined based on the primary identity of the first basic computing unit.

9. The basic computing unit according to any one of claims 1 to 8, wherein the basic computing unit comprises a plurality of areas, and the plurality of areas are determined based on a hardware configuration or a cabling layout on the basic computing unit.

10. The basic computing unit according to claim 9, wherein the plurality of areas comprise a first area, a second area, and a third area, the third area is located between the first area and the second area, external interfaces are located in the first area and the second area, and the processor and the memory are located in the third area.

11. The basic computing unit according to any one of claims 1 to 10, wherein the external interface comprises a management interface, a power interface, and a high-speed interface, and the basic computing unit is connected to the extension unit through the management interface, connected to an ingress power supply through the power interface, and connected to a component or another basic computing unit through the high-speed interface.

12. The basic computing unit according to any one of claims 1 to 11, wherein basic computing units of different sizes comprise different quantities of processors or different sizes of memories.

13. The basic computing unit according to any one of claims 1 to 12, wherein the basic computing unit is mounted on a lining board via the mounting structure, and the lining board is mounted on the chassis; or
the basic computing unit is directly mounted on the chassis via the mounting structure.

14. The basic computing unit according to claim 13, wherein when the basic computing unit is mounted on the lining board via the mounting structure, the basic computing unit adjusts a mounting height based on a convex hull height of a self-clinching nut part that is on the lining board.

15. A mainboard, wherein the mainboard comprises the basic computing unit according to any one of claims 1 to 14.

16. A computing device, comprising the mainboard according to claim 15, wherein the mainboard comprises the basic computing unit according to any one of claims 1 to 14.
